# EUROPÄISCHE PATENTSCHRIFT

(11) **EP 3 186 103 B1**
(45) Veröffentlichungstag und Bekanntmachung des Hinweises auf die Patenterteilung: **11.09.2019**
(21) Anmeldenummer: 15738017.1
(22) Anmeldetag: 08.07.2015
(51) Int. Cl.: B60K 26/02

(54) **AKTIVES FAHRPEDAL MIT SCHNECKENGETRIEBE**
ACTIVE ACCELERATOR PEDAL COMPRISING A WORM GEAR
PÉDALE D'ACCÉLÉRATEUR ACTIVE À ENGRENAGE À VIS SANS FIN

(30) Priorität: 29.08.2014 DE 102014217319
(43) Veröffentlichungstag der Anmeldung: 05.07.2017
(73) Patentinhaber: Robert Bosch GmbH, 70442 Stuttgart (DE)
(72) Erfinder: SCHWEINFURTH, Reiner, 75031 Eppingen (DE); SIEBER, Udo, 74321 Bietigheim (DE); HENNING, Daniel, 74372 Sersheim (DE); NOACK, Bjoern, 71277 Rutesheim (DE); HLAVKA, Milos, 37312 Borovany (CZ)
(86) Internationale Anmeldenummer: PCT/EP2015/065567
(87) Internationale Veröffentlichungsnummer: WO 2016/030066

(56) Entgegenhaltungen:
- KR-B1- 101 406 489
- US-A1- 2011 260 557
- US-A1- 2012 304 799

## Beschreibung

### Stand der Technik

Die vorliegende Erfindung betrifft ein aktives Fahrpedal eines Fahrzeugs mit einem Schneckengetriebe.

Um Fahrern haptische Rückmeldungen über Fahrzeugzustände und Zustandsänderungen zu geben, zum Hinweis auf Gefahren oder zum Hinweis auf ein verbrauchsoptimiertes Fahren, können Pedale des Fahrzeugs verwendet werden. Die Rückmeldungen können beispielsweise als Gegenkraft am Pedal aufgebracht werden und abhängig von einer Situation verschiedene Ausgestaltungsformen, z.B. pulsierend oder vibrierend oder als Kraftschwelle, annehmen. Eine auf das Pedal auszuübende Gegenkraft liegt dabei im Bereich von 10 bis 15 N, wobei in bestimmten Situationen die Gegenkraft auch dauerhaft aufzubringen ist. Aus der DE 102011054655 A1 ist beispielsweise ein aktives Fahrpedal bekannt, bei dem die Gegenkraft mittels eines Elektromotors aufgebracht wird und über ein schräg verzahntes Getriebe auf das Pedal übertragen wird. Dieses aktive Fahrpedal nimmt jedoch durch diese Ausgestaltung einen sehr großen Bauraum ein. Insbesondere im Fußraum eines Fahrzeugs ist Bauraum jedoch begrenzt und sollte möglichst effektiv eingesetzt werden.

Aus der KR 101 406 489 B1 ist ein aktives Fahrpedal bekannt.

Aus der US 2011 / 0 260 557 A1 ist ein Aktuator für ein aktives Fahrpedal bekannt.

Aus der US 2012 / 0 304 799 A1 ist eine aktive ECO-Pedalvorrichtung bekannt.

### Offenbarung der Erfindung

Das erfindungsgemäße aktive Fahrpedal eines Fahrzeugs mit den Merkmalen des Anspruchs 1 weist demgegenüber den Vorteil auf, dass nur ein geringer Bauraum notwendig ist und das Fahrpedal sehr einfach und kostengünstig aufgebaut ist.

Auch kann erfindungsgemäß eine hohe Verfügbarkeit der aktiven Fahrpedalfunktionen sichergestellt werden. Dies wird erfindungsgemäß dadurch erreicht, dass das aktive Fahrzeugfahrpedal eine Pedaleinheit und eine Aktuatoreinheit umfasst. Die Pedaleinheit weist an einer Schwenkachse ein schwenkbar angeordnetes Pedal auf. Die Aktuatoreinheit umfasst einen elektrischen Antrieb, insbesondere einen elektronisch kommutierten Gleichstrommotor, und ein Schneckengetriebe mit einer Schnecke und einem angetriebenen Schneckenelement. Das Schneckengetriebe ist dabei zwischen dem elektrischen Antrieb und der Pedaleinheit angeordnet. Die Aktuatoreinheit ist ferner eingerichtet, einer auf das Pedal (z.B. durch eine Person ausgeübten) Pedalkraft eine Gegenkraft entgegenzusetzen. Somit kann dem Fahrer eine haptische Rückmeldung über das Pedal gegeben werden, beispielsweise für ein kraftstoffarmes Fahren oder eine Schwelle bei einem Hybridfahrzeug, an welcher vom elektrischen Antrieb auf einen Verbrennungsmotor umgeschaltet wird. Das Schneckengetriebe weist ferner den Vorteil einer gewissen Selbsthemmung auf, so dass Positionen der Aktuatoreinheit zur Erzeugung der Gegenkraft bei nur geringer Stromaufnahme gehalten werden.

Die Unteransprüche zeigen bevorzugte Weiterbildungen der Erfindung.

Vorzugsweise ist das Schneckengetriebe einstufig mit genau einer Schnecke und genau einem angetriebenen Schneckenelement, insbesondere einem Schneckenrad, ausgebildet. Hierdurch kann ein geringer Bauraum sichergestellt werden. Durch Anpassungen des Schneckengetriebes an die jeweiligen Gegebenheiten können somit einstufige Schneckengetriebe verwendet werden. Es ist auch möglich, ein zweistufiges oder mehrstufiges Schneckengetriebe vorzusehen, wobei eine Selbsthemmung des Schneckengetriebes mit zunehmenden Stufen stärker wird.

Eine noch bessere Kompaktheit lässt sich erreichen, wenn eine Schwenkachse des Pedals und eine Mittelachse eines Schneckenrads zusammenfallen. Insbesondere kann bevorzugt das Schneckenrad auf eine Schwenkachse des Pedals aufgesteckt werden, so dass eine gute Integration des Schneckengetriebes in die Pedaleinheit möglich ist.

Erfindungsgemäß weist die Pedaleinheit einen ersten Anschlag und die Aktuatoreinheit einen zweiten Anschlag auf. Die beiden Anschläge sind dabei vorgesehen, um eine von der Aktuatoreinheit aufgebrachte Gegenkraft auf die Pedaleinheit zu übertragen. Hierbei kann eine einfache und robuste Kraftübertragung ermöglicht werden. Besonders bevorzugt sind dabei an einem oder an beiden Anschlägen ein elastisches Element zur Dämpfung vorgesehen.

Gemäß einer weiteren bevorzugten Ausgestaltung der Erfindung umfasst das aktive Fahrpedal ferner ein Federelement, welches in Wirkverbindung zwischen dem Schneckengetriebe und dem Pedal angeordnet ist. Das Federelement kann dabei eine zusätzliche Kraft aufbringen, welche sich mit der von der Aktuatoreinheit aufgebrachten Kraft zur gewünschten Gegenkraft addiert. Das Federelement ist bevorzugt eine Druckfeder oder alternativ eine Torsionsfeder. Ein weiterer Vorteil des Federelements liegt darin, dass das Federelement Schwingungen aufnehmen kann und somit dämpfende Eigenschaften aufweist, so dass ein Fahrer am Pedal keine ungewünschten Vibrationen oder dergleichen wahrnimmt.

Weiter bevorzugt umfasst das aktive Fahrpedal ferner einen ersten und einen zweiten Wegsensor. Der erste Wegsensor bestimmt dabei eine Position eines mit dem Schneckengetriebe verbundenen bewegbaren Bauteils der Aktuatoreinheit. Der zweite Wegsensor bestimmt eine Position des Pedals der Pedaleinheit. Bei Verwendung des Federelements zwischen der Pedaleinheit und der Aktuatoreinheit ist es somit möglich, über eine Differenz zwischen einer Pedalposition und einer Aktorposition die gewünschte Gegenkraft am Pedal einzustellen, da die Positionen die von dem Federelement aufgebrachte Gegenkraft definieren. Somit kann die Krafteinstellung bzw. Kraftregelung auf eine reine Positionsregelung zurückgeführt werden, so dass die Steuereinheit sehr einfach und kostengünstig aufgebaut werden kann.

Gemäß einer weiteren bevorzugten Ausgestaltung der Erfindung ist zwischen dem Schneckengetriebe und der Pedaleinheit ein Freiweg vorhanden, wobei erst nach Zurücklegen des Freiwegs die erzeugte Gegenkraft der Pedaleinheit entgegensetzbar ist. Somit kann die Aktuatoreinheit zuerst betrieben werden, ohne dass zunächst eine Gegenkraft auf das Pedal erzeugt wird. Erst nach Zurücklegen des vorbestimmten Freiweges kommt dann die Erzeugung der Gegenkraft gegenüber dem Pedal zustande. Hierdurch können gewünschte Verzögerungen bei der Erzeugung der Gegenkraft einfach realisiert werden.

Weiter bevorzugt ist das angetriebene Schneckenelement in einem Gehäuse der Pedaleinheit angeordnet. Dadurch kann ein besonders kompakter Aufbau erreicht werden. Das Gehäuse weist vorzugsweise ein Fenster auf, durch welches die Schnecke hindurchgreift und mit dem Schneckenelement kämmt. Hierdurch kann die Kompaktheit des aktiven Fahrpedals weiter erhöht werden.

Weiter bevorzugt weist das Schneckengetriebe ein Schneckenrad mit einer Innenverzahnung auf, wobei die Schnecke im Inneren des Schneckenrads angeordnet ist. Auch hierdurch kann eine weitere Kompaktheit erreicht werden. Ebenfalls weiter bevorzugt weist das Schneckenrad eine Außenverzahnung auf. Hierbei kann die Schnecke dann entlang des Umfangs des Außenrads an beliebiger Position positioniert werden, so dass eine höchste Flexibilität hinsichtlich der Anordnung der Schnecke und des mit der Schnecke verbundenen elektrischen Antriebs erreicht wird.

Weiter alternativ weist das Schneckengetriebe ein Schneckenelement auf, welches eine in Axialrichtung gerichtete Schneckenverzahnung aufweist, die mit der Schnecke kämmt. Auch hierdurch werden weitere Alternativen hinsichtlich einer möglichen Anordnung von Bauteilen des aktiven Fahrpedals erhalten.

Ferner umfasst das Fahrpedal eine Steuereinheit zur Betätigung der Aktuatoreinheit, wobei die Aktuatoreinheit eingerichtet ist, basierend auf Signalen der Steuereinheit, einer auf das Pedal ausgeübten Pedalkraft eine Gegenkraft entgegenzusetzen.

### Zeichnung

Nachfolgend werden bevorzugte Ausführungsbeispiele der Erfindung unter Bezugnahme auf die begleitende Zeichnung im Detail beschrieben. Gleiche bzw. funktional gleiche Teile sind jeweils mit den gleichen Bezugszeichen bezeichnet. In der Zeichnung ist:
- Figur 1: eine schematische Ansicht eines aktiven Fahrpedals gemäß einem ersten Ausführungsbeispiel der Erfindung,
- Figur 2: eine schematische Ansicht eines aktiven Fahrpedals gemäß einem zweiten Ausführungsbeispiel der Erfindung,
- Figur 3: eine Explosionsdarstellung eines aktiven Fahrpedals gemäß einem dritten Ausführungsbeispiel der Erfindung,
- Figur 4: eine Schnittansicht des aktiven Fahrpedals von Figur 3,
- Figur 5: eine schematische Ansicht eines aktiven Fahrpedals gemäß einem vierten Ausführungsbeispiel der Erfindung und
- Figur 6: eine schematische Draufsicht auf das aktive Fahrpedal von Figur 5.

### Bevorzugte Ausführungsformen der Erfindung

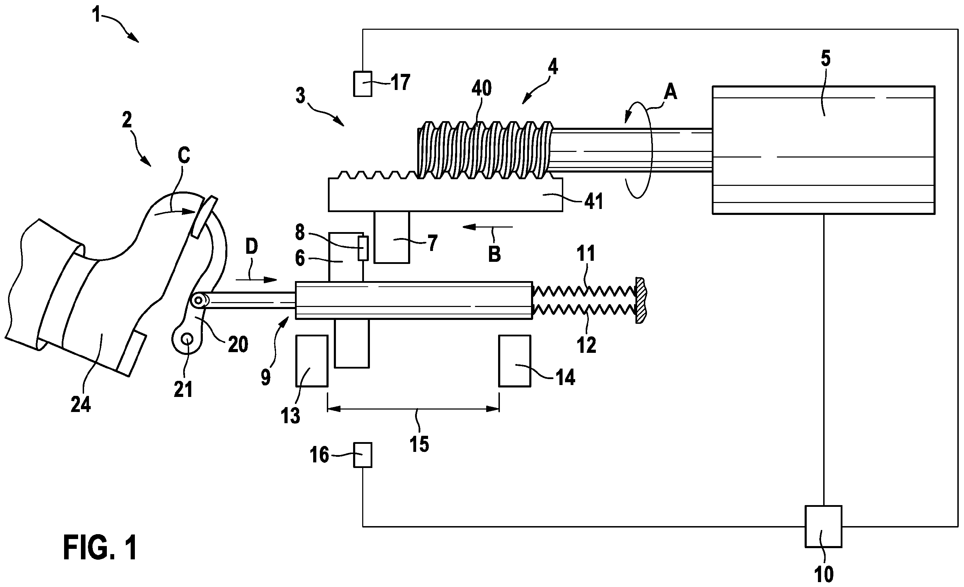

Nachfolgend wird unter Bezugnahme auf Figur 1 ein aktives Fahrpedal 1 gemäß einem ersten bevorzugten Ausführungsbeispiel der Erfindung im Detail beschrieben.

Wie aus Figur 1 ersichtlich ist, umfasst das aktive Fahrpedal 1 eine Pedaleinheit 2 und eine Aktuatoreinheit 3. Die Abgrenzung zwischen der Pedaleinheit 2 und der Aktuatoreinheit 3 wird durch einen ersten Anschlag 6 der Pedaleinheit und einen zweiten Anschlag 7 der Aktuatoreinheit definiert.

Die Pedaleinheit 2 umfasst ein Pedal 20, welches z.B. mittels eines Fußes 24 betätigbar ist. Das Pedal kann jedoch auch vollkommen anders betätigt werden, z.B. mit einer Hand oder durch einen Roboter, der als "Fahrer" fungiert und Sensoren zur Gegenkraftermittlung aufweist. Das Pedal 20 ist um eine Schwenkachse 21 schwenkbar. In diesem Ausführungsbeispiel ist ein stehendes Pedal dargestellt, es kann jedoch auch ein hängendes Pedal verwendet werden. Das Pedal 20 ist über eine Gestängeanordnung 9 mit einem ersten und zweiten Rückstellelement 11, 12 (aus Sicherheitsgründen redundant ausgeführt) verbunden. Ein maximaler Pedalweg 15 ist zwischen einem Leerlaufanschlag 13 und einem Volllastanschlag 14 definiert (vergleiche Figur 1).

Ein erster Wegsensor 16 erfasst eine Position des Pedals 20 über einen Verfahrweg der Gestängeanordnung 9.

Die Aktuatoreinheit 3 umfasst einen elektrischen Antrieb 5 und ein Schneckengetriebe 4. Das Schneckengetriebe ist einstufig ausgebildet und weist eine vorbestimmte Selbsthemmung auf. Das Schneckengetriebe 4 umfasst eine Schnecke 40 und ein angetriebenes Schneckenelement 41, welches in Figur 1 nur schematisch als Zahnstange dargestellt ist. Am angetriebenen Schneckenelement 41 ist ein zweiter Anschlag 7 angeordnet. Der erste Anschlag 6 ist an der Gestängeanordnung 9 angeordnet. Ein zweiter Wegsensor 17 bestimmt eine Position des Schneckenelements 41.

Im normalen Betrieb betätigt ein Fahrer mit seinem Fuß 24 das Pedal 20, so dass abhängig vom Pedalweg bzw. der Pedalstellung, welche mittels des ersten Wegsensors 16 erfassbar ist, eine Steuereinheit 10 einen Antrieb des Fahrzeugs steuert. Die Aktuatoreinheit 3 befindet sich dabei in einem nicht aktivierten Zustand, vollständig zurückgezogen, so dass der erste Anschlag 6 der Pedaleinheit 2 nicht mit dem zweiten Anschlag 7 der Aktuatoreinheit 3 in Kontakt kommen kann.

Wenn nun ein aktives Fahrpedal gewünscht wird, beispielsweise in einer Kraftstoffsparstellung für das Fahrzeug, wird über die Steuereinheit 10 der elektrische Antrieb 5 betätigt (Pfeil A), so dass der zweite Anschlag 7 über das Schneckengetriebe 4 in Richtung des Pfeils B bewegt wird. Sobald der erste Anschlag 6 mit dem zweiten Anschlag 7 in Kontakt kommt, wird eine Gegenkraft erzeugt, welche der Fahrer bewusst am Pedal 20 wahrnimmt. Zur Dämpfung des Kontaktes ist zwischen dem ersten Anschlag 6 und dem zweiten Anschlag 7 ein Elastomerelement 8 vorgesehen. Die erzeugte Gegenkraft liegt beispielsweise in einem Bereich von 10 bis 15 N.

Der Fahrer kann dann das Pedal 20 nur so weit durchdrücken (Pfeil C), bis die Gestängeanordnung 9 so weit verfahren ist (Pfeil D), so dass der Anschlag 6 mit dem Anschlag 7 in Kontakt kommt. Wenn der Fahrer stärker auf das Pedal drückt, wird die Selbsthemmung des Schneckengetriebes 4 überwunden, so dass der Anschlag 6 das Schneckenelement 41 in Richtung entgegen der Bewegungsrichtung B und entgegen der aufgebrachten Gegenkraft bewegt.

Es sei angemerkt, dass die Aktuatoreinheit 3 nur in die Richtung des Pfeils B wirkt, so dass die Aktuatoreinheit nicht beschleunigend wirken kann, sondern das Pedal 20 nur in Richtung der Leerlaufposition mit einer Kraft beaufschlagen kann.

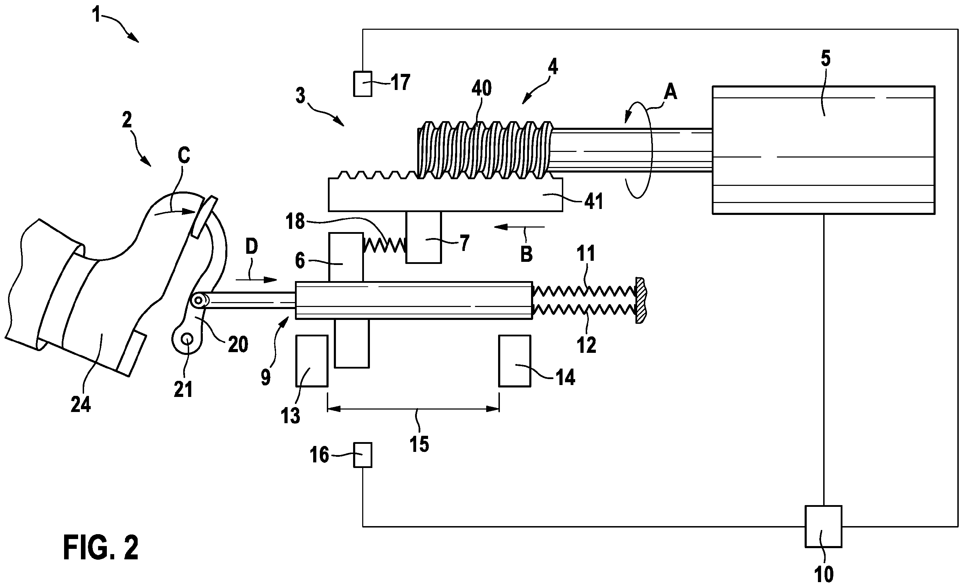

Figur 2 zeigt ein aktives Fahrpedal 1 gemäß einem zweiten Ausführungsbeispiel der Erfindung. Das zweite Ausführungsbeispiel entspricht im Wesentlichen dem ersten Ausführungsbeispiel, wobei im Unterschied zum ersten Ausführungsbeispiel eine Koppelfeder 18 zwischen dem ersten Anschlag 6 und dem zweiten Anschlag 7 angeordnet ist. In diesem Ausführungsbeispiel ist die Koppelfeder eine lineare Druckfeder. Da sich die Pedaleinheit 2 und die Aktuatoreinheit 3 unabhängig voneinander bewegen und die jeweiligen Positionen mittels des ersten Wegsensors 16 bzw. des zweiten Wegsensors 17 erfasst werden, ist, abhängig von der Federkennlinie, ein Maß einer Verspannung der Koppelfeder 18 die sich ergebende Gegenkraft, die ein Fahrer zusätzlich am Pedal 20 spürt. Da die Positionen mittels der Wegsensoren bestimmt werden, ist es somit möglich, die gewünschte Gegenkraft durch die Pedalposition bzw. die Aktuatorposition einzustellen. Hierdurch kann die Krafteinstellung der Gegenkraft auf eine reine Positionsregelung zurückgeführt werden. Die Koppelfeder 18 bewirkt auch zusätzlich noch ein Dämpfen von Schwingungen oder dergleichen, welche am Pedal 20 ein unangenehmes Gefühl für den Fahrer bewirken könnten.

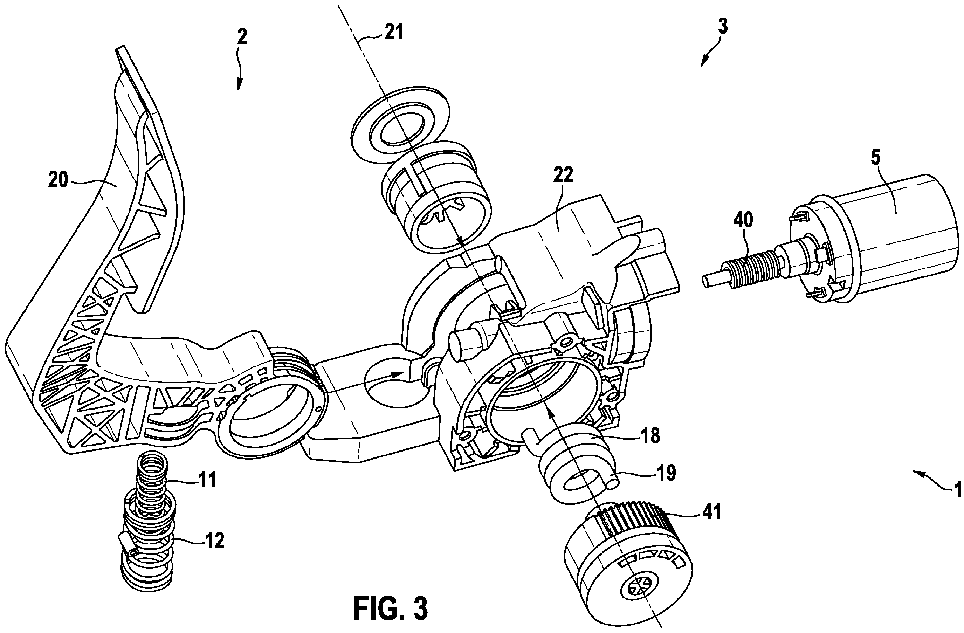

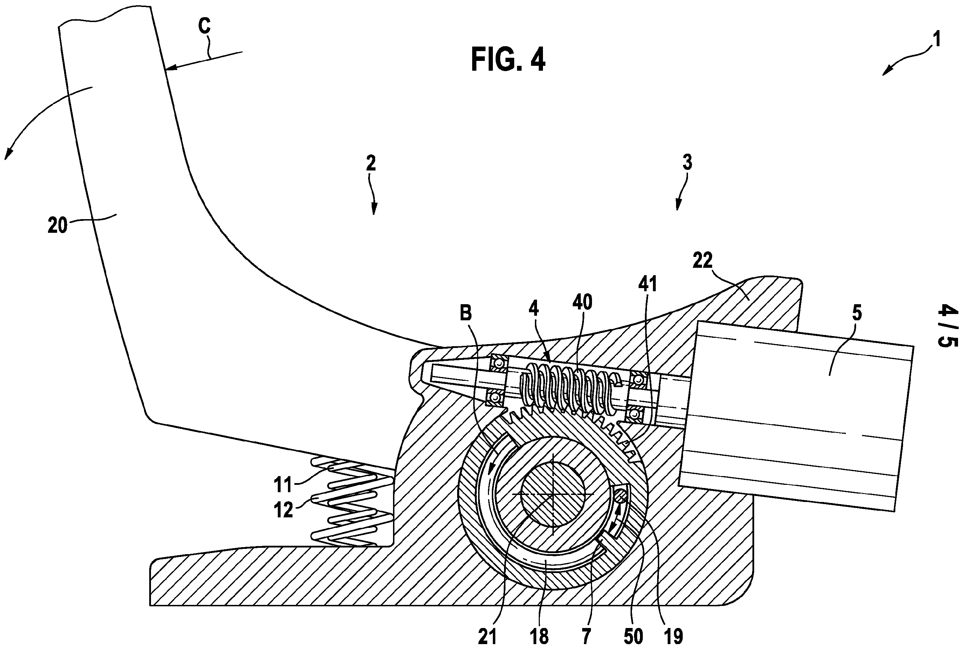

Nachfolgend wird unter Bezugnahme auf die Figuren 3 und 4 ein aktives Fahrpedal gemäß einem dritten Ausführungsbeispiel der Erfindung im Detail beschrieben.

Das dritte Ausführungsbeispiel entspricht hauptsächlich dem zweiten Ausführungsbeispiel, wobei wiederum eine Koppelfeder 18 zwischen der Pedaleinheit 2 und der Aktuatoreinheit 3 vorgesehen ist. Im dritten Ausführungsbeispiel ist die Koppelfeder 18 jedoch als zylindrische Torsionsfeder ausgebildet. Weiterhin ist ein als Schneckenrad ausgebildetes Schneckenelement 41 koaxial zu einer Schwenkachse 21 des Pedals 20 angeordnet (Figur 4). Das Schneckenelement 41 ist dabei vollständig in einem Gehäuse 22 der Pedaleinheit 2 angeordnet.

Wie weiterhin aus Figur 4 ersichtlich ist, weist dieses Ausführungsbeispiel zusätzlich einen Freiweg 50 auf. Der Freiweg 50 stellt sicher, dass die Aktuatoreinheit 3 zuerst über eine vorbestimmte Wegstrecke betätigt werden muss, bis eine Gegenkraft gegen eine Pedalbewegung erzeugbar ist. Erst wenn ein Federende 19 mit einem Anschlag 7 am Schneckenelement 41 (vergleiche Figur 4) in Kontakt kommt, wird die Gegenkraft durch die Aktuatoreinheit 3 erzeugt. Wie aus den Figuren 3 und 4 ersichtlich ist, ist diese erfindungsgemäße Ausgestaltung besonders kompakt aufgebaut. Auch die Schnecke 40 des Schneckengetriebes 4 ist vollständig im Gehäuse 22 der Pedaleinheit 2 angeordnet.

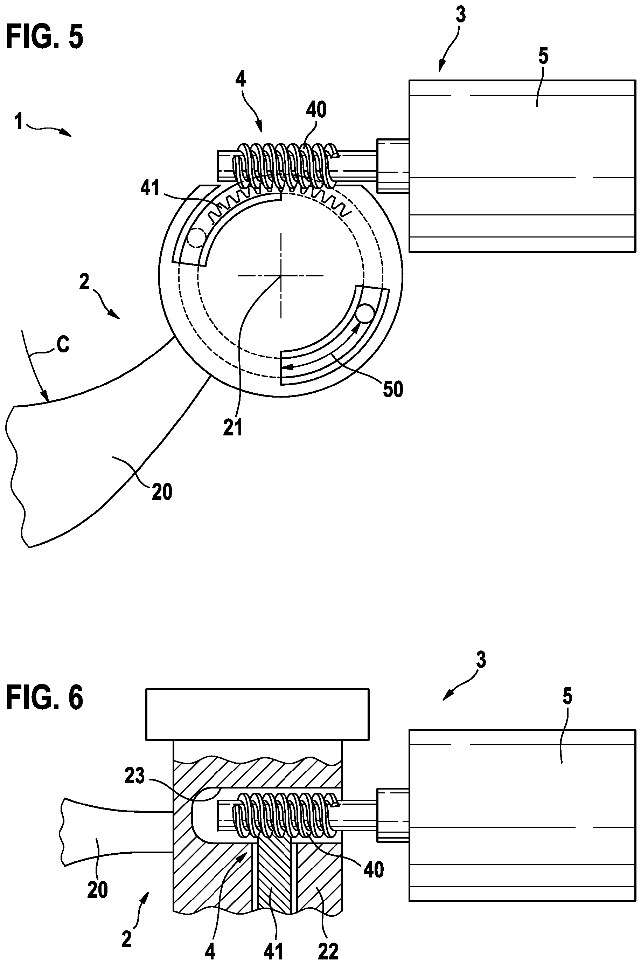

Die Figuren 5 und 6 zeigen ein aktives Fahrpedal 1 gemäß einem vierten Ausführungsbeispiel der Erfindung. Bei diesem Ausführungsbeispiel ist wiederum ein Freiweg 50 zwischen der Pedaleinheit 2 und der Aktuatoreinheit 3 vorgesehen. Ferner ist im Gehäuse 22 der Pedaleinheit 2 ein Fenster 23 vorgesehen. Das Fenster 23 dient dabei dazu, dass die Schnecke 40, welche teilweise in das Fenster 23 vorsteht, mit dem als Schneckenrad ausgebildeten Schneckenelement 41 kämmen kann. Hierdurch wird ein besonders kompaktes Gehäuse 22 der Pedaleinheit 2 bereitgestellt. Weiterhin kann durch die Lösung mit dem Fenster 23 im Gehäuse 22 die Pedaleinheit 2 jeweils auf unterschiedliche Fahrzeughersteller einfach angepasst werden, indem einfach ein anderes Gehäuse mit anderer Position des Fensters 23 bereitgestellt wird und entsprechend der elektrische Antrieb 5 positioniert wird.

## Patentansprüche

1. Aktives Fahrpedal eines Fahrzeugs, umfassend
- eine Pedaleinheit (2) mit einem an einer Schwenkachse (21) schwenkbar angeordneten Pedal (20), und
- eine Aktuatoreinheit (3) mit einem elektrischen Antrieb (5) und einem Schneckengetriebe (4) mit einer Schnecke (40) und einem angetriebenen Schneckenelement (41),
- wobei das Schneckengetriebe (4) zwischen dem elektrischen Antrieb (5) und der Pedaleinheit (2) angeordnet ist, und
- wobei die Aktuatoreinheit (3) eingerichtet ist, einer auf das Pedal ausgeübten Pedalkraft eine Gegenkraft entgegenzusetzen,
**dadurch gekennzeichnet, dass**
die Pedaleinheit (2) einen ersten Anschlag (6) und die Aktuatoreinheit (3) einen zweiten Anschlag (7) aufweist, um die von der Aktuatoreinheit (3) aufgebrachte Gegenkraft auf die Pedaleinheit (2) zu übertragen.

2. Fahrpedal nach Anspruch 1, **dadurch gekennzeichnet, dass** das Schneckengetriebe (4) einstufig mit genau einer Schnecke (40) und genau einem Schneckenrad ausgebildet ist.

3. Fahrpedal nach einem der vorhergehenden Ansprüche, **dadurch gekennzeichnet, dass** das Schneckenelement (41) ein Schneckenrad ist.

4. Fahrpedal nach Anspruch 3, **dadurch gekennzeichnet, dass** die Schwenkachse (21) des Pedals (20) und eine Mittelachse des Schneckenrads zusammenfallen.

5. Fahrpedal nach einem der vorhergehenden Ansprüche, ferner umfassend ein Federelement (18), welches in Wirkverbindung zwischen dem Schneckengetriebe (4) und dem Pedal (20) angeordnet ist.

6. Fahrpedal nach Anspruch 5, **dadurch gekennzeichnet, dass** das Federelement (18) eine Druckfeder oder eine Torsionsfeder ist.

7. Fahrpedal nach einem der vorhergehenden Ansprüche, ferner umfassend einen ersten Wegsensor (16) und einen zweiten Wegsensor (17), wobei der erste Wegsensor (16) eine Position eines bewegbaren Bauteils, insbesondere des angetriebenen Schneckenelements (41), der Aktuatoreinheit bestimmt und der zweite Wegsensor (17) eine Position des Pedals (20) bestimmt.

8. Fahrpedal nach einem der vorhergehenden Ansprüche, **dadurch gekennzeichnet, dass** zwischen dem Schneckengetriebe (4) und der Pedaleinheit (2) ein Freiweg (50) vorhanden ist, wobei nach Zurücklegen des Freiwegs (50) die Gegenkraft der Aktuatoreinheit (3) der Pedaleinheit (2) entgegensetzbar ist.

9. Fahrpedal nach einem der vorhergehenden Ansprüche, **dadurch gekennzeichnet, dass** das Schneckenelement (41) in einem Gehäuse (22) der Pedaleinheit (2) angeordnet ist und das Gehäuse (22) ein Fenster (23) aufweist, durch welches die Schnecke (40) in das Schneckenelement (41) eingreift.

10. Fahrpedal nach Anspruch 6 und Anspruch 8, **dadurch gekennzeichnet, dass** der Freiweg (50) zwischen einem Federende (19) des Federelements (18) und einem Anschlag (42) am Schneckengetriebe (4) vorhanden ist.

11. Fahrpedal nach einem der vorhergehenden Ansprüche, ferner umfassend eine Steuereinheit (10) zur Betätigung der Aktuatoreinheit (3), wobei die Aktuatoreinheit (3) eingerichtet ist, basierend auf Signalen der Steuereinheit (10) einer auf das Pedal (20) ausgeübten Pedalkraft eine Gegenkraft entgegenzusetzen.

## Claims

1. Active accelerator pedal of a vehicle, comprising
- a pedal unit (2) having a pedal (20) pivotally arranged on a pivot axis (21), and
- an actuator unit (3) having an electrical drive (5), and a worm gear (4) with a worm (40) and a driven worm element (41),
- wherein the worm gear (4) is arranged between the electrical drive (5) and the pedal unit (2), and
- wherein the actuator unit (3) is designed to apply a counterforce in opposition to a pedal force exerted on the pedal,
**characterized in that**
the pedal unit (2) comprises a first stop (6) and the actuator unit (3) a second stop (7), in order to transmit the counterforce applied by the actuator unit (3) to the pedal unit (2).

2. Accelerator pedal according to Claim 1, **characterized in that** the worm gear (4) is of single-step design with just one worm (40) and just one worm wheel.

3. Accelerator pedal according to one of the preceding Claims, **characterized in that** the worm element (41) is a worm wheel.

4. Accelerator pedal according to Claim 3, **characterized in that** the pivot axis (21) of the pedal (20) and a central axis of the worm wheel coincide.

5. Accelerator pedal according to one of the preceding claims, further comprising a spring element (18), which is arranged in an operative connection between the worm gear (4) and the pedal (20).

6. Accelerator pedal according to Claim 5, **characterized in that** the spring element (18) is a compression spring or a torsion spring.

7. Accelerator pedal according to one of the preceding claims, further comprising a first travel sensor (16) and a second travel sensor (17), wherein the first travel sensor (16) determines a position of a moveable component, in particular of the driven worm element (41), of the actuator unit, and the second travel sensor (17) determines a position of the pedal (20) .

8. Accelerator pedal according to one of the preceding claims, **characterized in that** a free travel (50) exists between the worm gear (4) and the pedal unit (2), wherein the counterforce of the actuator unit (3) can be applied in opposition to the pedal unit (2) after covering the free travel (50).

9. Accelerator pedal according to one of the preceding claims, **characterized in that** the worm element (41) is arranged in a housing (22) of the pedal unit (2), and the housing (22) has a window (23), through which the worm (40) engages in the worm element (41) .

10. Accelerator pedal according to Claim 6 and Claim 8, **characterized in that** the free travel (50) exists between a spring end (19) of the spring element (18) and a stop (42) on the worm gear (4).

11. Accelerator pedal according to one of the preceding claims, further comprising a control unit (10) for operation of the actuator unit (3), wherein the actuator unit (3) is designed, on the basis of signals from the control unit (10), to apply a counterforce in opposition to a pedal force exerted on the pedal (20).

## Revendications

1. Pédale d'accélérateur active d'un véhicule, comprenant
- une unité de pédale (2) avec une pédale (20) disposée de façon pivotante sur un axe de pivotement (21), et
- une unité d'actionneur (3) avec un entraînement électrique (5) et un engrenage à vis sans fin (4) avec une vis sans fin (40) et un élément à vis entraîné (41),
- dans laquelle l'engrenage à vis sans fin (4) est disposé entre l'entraînement électrique (5) et l'unité de pédale (2), et
- dans laquelle l'unité d'actionneur (3) est conçue pour opposer une force opposée à la force de pédale exercée sur la pédale,
**caractérisée en ce que** l'unité de pédale (2) présente une première butée (6) et l'unité d'actionneur (3) présente une seconde butée (7), afin de transmettre à l'unité de pédale (2) la force opposée appliquée par l'unité d'actionneur (3).

2. Pédale d'accélérateur selon la revendication 1, **caractérisée en ce que** l'engrenage à vis sans fin (4) est réalisé à un étage avec exactement une vis sans fin (40) et exactement une roue à vis.

3. Pédale d'accélérateur selon l'une quelconque des revendications précédentes, **caractérisée en ce que** l'élément à vis (41) est une roue à vis.

4. Pédale d'accélérateur selon la revendication 3, **caractérisée en ce que** l'axe de pivotement (21) de la pédale (20) et un axe central de la roue à vis coïncident.

5. Pédale d'accélérateur selon l'une quelconque des revendications précédentes, comprenant en outre un élément de ressort (18), qui est disposé en liaison active entre l'engrenage à vis sans fin (4) et la pédale (20) .

6. Pédale d'accélérateur selon la revendication 5, **caractérisée en ce que** l'élément de ressort (18) est un ressort de pression ou un ressort de torsion.

7. Pédale d'accélérateur selon l'une quelconque des revendications précédentes, comprenant en outre un premier détecteur de course (16) et un second détecteur de course (17), dans laquelle le premier détecteur de course (16) détermine une position d'un composant mobile, en particulier de l'élément à vis entraîné (41), de l'unité d'actionneur et le second détecteur de course (17) détermine une position de la pédale (20).

8. Pédale d'accélérateur selon l'une quelconque des revendications précédentes, **caractérisée en ce qu'**il se trouve une course libre (50) entre l'engrenage à vis sans fin (4) et l'unité de pédale (2), dans laquelle la force opposée de l'unité d'actionneur (3) peut être opposée à l'unité de pédale (2) après le parcours de la course libre (50).

9. Pédale d'accélérateur selon l'une quelconque des revendications précédentes, **caractérisée en ce que** l'élément à vis (41) est disposé dans un boîtier (22) de l'unité de pédale (2) et le boîtier (22) présente une fenêtre (23), à travers laquelle la vis sans fin (40) engrène avec l'élément à vis (41).

10. Pédale d'accélérateur selon la revendication 6 et la revendication 8, **caractérisée en ce que** la course libre (50) se trouve entre une extrémité de ressort (19) de l'élément de ressort (18) et une butée (42) sur l'engrenage à vis sans fin (4).

11. Pédale d'accélérateur selon l'une quelconque des revendications précédentes, comprenant en outre une unité de commande (10) pour l'actionnement de l'unité d'actionneur (3), dans laquelle l'unité d'actionneur (3) est conçue pour opposer une force opposée à une force de pédale exercée sur la pédale (20) sur la base de signaux de l'unité de commande (10).
